# EUROPÄISCHE PATENTSCHRIFT

(11) **EP 2 236 414 B1**
(45) Veröffentlichungstag und Bekanntmachung des Hinweises auf die Patenterteilung: **26.04.2017**
(21) Anmeldenummer: 10002481.9
(22) Anmeldetag: 10.03.2010
(51) Int. Cl.: B64C 27/00, B64C 27/02

(54) **TRAGSCHRAUBER**
GYROCOPTER
AUTOGIRE

(30) Priorität: 01.04.2009 DE 102009015806
(43) Veröffentlichungstag der Anmeldung: 06.10.2010
(73) Patentinhaber: AutoGyro AG, 9100 Herisau (CH)
(72) Erfinder: Birkner, Otmar, 31137 Hildesheim (DE)
(74) Vertreter: Plöger, Jan Manfred

(56) Entgegenhaltungen:
- DE-A1-102004 058 301
- GB-A- 2 043 574
- GB-A- 2 105 668
- US-A- 4 819 182
- US-A- 4 912 999
- US-A1- 2008 279 685
- US-B1- 6 231 013

## Beschreibung

Die Erfindung betrifft einen Tragschrauber mit einer Nutzlastaufnahme in Form eines Sitzes, einem Rotor und einer den Rotor mit der Nutzlastaufnahme verbindenden Tragstruktur.

Derartige Tragschrauber werden beispielsweise als Luftsportgerät verwendet. Nachteilig an bekannten Tragschraubern ist, dass insbesondere längere Flüge bei den Piloten zu Ermüdungserscheinungen führen können.

Der Erfindung liegt die Aufgabe zugrunde, einen Tragschrauber anzugeben, der besonders ermüdungsfrei geflogen werden kann.

Aus der US 4,819,182 und der US 2008/0279685 A1 sind Systeme zum aktiven Einwirken auf Stellelemente bekannt, mittels derer die Vibrationen in einem Hubschrauber vermindert werden können. Derartige Systeme sind in einem Tragschrauber prinzipbedingt oder wegen des hohen technischen Aufwands nicht einsetzbar.

Aus der US 6,231,013 B1 ist bekannt, die Kontur eines Rotorflügels beim Betrieb zu ändern, um so Schwingungen zu reduzieren.

Aus der GB 2 043 574 A ist ein Rotorkopf für eine Helikopter bekannt, der über elastische Elemente an dem Rumpf des Helikopters befestigt ist. Ein derartiges System ist relativ aufwändig.

Aus der US 4,912,999 ist ebenfalls ein Rotorkopf für einen Helikopter bekannt, der mehrere, gegeneinander durch Dämpfer abgetrennte Achsen aufweist. Auch dieses System ist aufwändig konstruiert.

Aus der DE 10 2004 058 301 A1 ist ein aktiver Dämpfer für einen Hubschrauber bekannt, bei dem die Getriebe-Rotor-Einheit die primäre Vibrationsquelle darstellt. Ein derartiges System ist wegen seiner Komplexität für Tragschrauber in der Regel ungeeignet.

Aus der GB 2 105 668 A ist ein System bekannt, mittels dem Vibrationen des Steuerknüppels reduziert werden können. Dazu werden hydraulische oder Reib-Dämpfer am Steuerknüppel angebracht, die so ausgelegt sind, dass sie die Funktion des Steuerknüppels nicht beeinträchtigen, Resonanzschwingungen aber vermindert werden. Vibrationen des Sitzes können so jedoch nicht verringert werden.

Die Erfindung löst das Problem durch einen Tragschrauber gemäß Anspruch 1.

Vorteilhaft an der Erfindung ist, dass das Vorsehen der Dämpfvorrichtung vom Rotor kommende Schwingungen unterdrückt, was zu einem ermüdungsärmeren Fliegen führt. Es hat sich nämlich herausgestellt, dass vom Rotor kommende Vibrationen maßgeblich zur Ermüdung des Piloten beitragen.

Vorteilhaft ist zudem, dass der erfindungsgemäße Tragschrauber besonders gelenkschonend geflogen werden kann. Insbesondere die Bandscheiben des Piloten werden gegenüber bekannten Tragschraubern entlastet, da sie weniger stark durch Vibrationen belastet werden.

Es ist ein weiterer Vorteil, dass das Dämpfen der Vibrationen die komplette Kanzel betreffen kann. Anders als wenn beispielsweise nur die Nutzlastaufnahme des Tragschraubers in Form eines Pilotensitzes gedämpft wird, entsteht keine Relativbewegung zwischen dem Steuerknüppel des Tragschraubers und dem Pilotensitz.

Der Erfindung liegt die Erkenntnis zugrunde, dass es möglich ist, die Steifigkeit der Tragstruktur zwischen Nutzlastaufnahme und Rotor zu vermindern, ohne die Flugstabilität des Tragschraubers zu beeinflussen. Das ist insofern überraschend, als dass eine verminderte Steifigkeit der Tragstruktur zu einer größeren Bewegung des Rotors führt. Dies wiederum bewirkt Änderungen am aerodynamischen Verhalten des Rotors, weshalb bislang eine besonders hohe Steifigkeit der Tragstruktur angestrebt wird.

Im Rahmen der vorliegenden Beschreibung wird unter der Nutzlastaufnahme insbesondere ein Pilotensitz für einen Piloten verstanden. Wenn es sich bei dem Tragschrauber um ein Luftsportgerät handelt, so kann die Nutzlastaufnahme einen, zwei oder drei Pilotensitze umfassen. Grundsätzlich ist die Erfindung auch für Tragschrauber im Modellformat geeignet. In diesem Fall kann die Nutzlastaufnahme beispielsweise eine Halterung für eine Kamera oder einen anderen Sensor sein. Besonders gut geeignet ist die Erfindung aber für Tragschrauber, die zum Personentransport ausgebildet sind.

Unter einer Tragstruktur wird insbesondere die Gesamtheit aller Elemente verstanden, die den Rotor mit der Nutzlastaufnahme so verbinden, dass die Last der Nutzlastaufnahme aufgenommen wird. Es kann sich dabei beispielsweise um ein Gestänge, ein einzelnes Tragrohr, ein System aus Tragrohr und Gestänge, oder Ähnliches handeln.

Der Tragschrauber umfasst bevorzugt einen Rotorkopf, der nicht Teil der Tragstruktur ist und zwischen der Tragstruktur, die auch als Rumpf bezeichnet werden kann, und dem Rotor angeordnet ist. Der Rotorkopf umfasst diejenigen Komponenten, die zum Betätigen des Rotors dienen. Vorzugsweise ist die Dämpfvorrichtung des Rumpfes.

Unter dem Merkmal, dass die Tragstruktur eine Dämpfvorrichtung zum Dämpfen von vom Rotor ausgehenden Schwingungen aufweist, ist insbesondere zu verstehen, dass die Tragstruktur einen ersten Abschnitt mit einer ersten Steifigkeit, einen zweiten Abschnitt mit einer zweiten Steifigkeit und einen dritten Abschnitt mit einer dritten Steifigkeit aufweist, wobei der zweite Abschnitt zwischen dem ersten und dem dritten Abschnitt angeordnet ist und eine Steifigkeit aufweist, die kleiner ist als die des ersten Abschnitts und die des dritten Abschnitts. Dabei ist die Steifigkeit des zweiten Abschnitts, insbesondere kleiner als die Hälfte der Steifigkeit des ersten Abschnitts und des dritten Abschnitts. Der zweite Abschnitt ist zudem so ausgebildet, dass eine Relativbewegung von erstem Abschnitt und drittem Abschnitt aktiv und/oder passiv gedämpft wird.

Unter dem Merkmal, dass die Tragstruktur einen ersten Abschnitt mit einer ersten Steifigkeit besitzt, wird dann insbesondere verstanden, dass der erste Abschnitt bezüglich einer Schwingung in einer ersten Ebene die erste Steifigkeit hat, also der Widerstand, den die Tragstruktur einer Verformung in dieser Ebene entgegensetzt. Im Kraftfluss vom Rotor zur Nutzlastaufnahme folgen dann ein zweiter Abschnitt mit einer zweiten, kleineren Steifigkeit und ein dritter Abschnitt mit einer dritten Steifigkeit. Diese Steifigkeiten beziehen sich ebenfalls auf eine Auslenkung in der gleichen Ebene.

Unter der Dämpfvorrichtung für vom Rotor ausgehenden Schwingungen wird insbesondere jede Vorrichtung verstanden, die so ausgelegt ist, dass bei Reisegeschwindigkeit, das heißt bei der höchsten dauerhaft möglichen Geschwindigkeit, die vom Rotor ausgehenden Schwingungen in zumindest einer Schwingungsebene um mehr als 80 % gemindert werden. Das bedeutet, dass die Amplitude der Schwingung an der Nutzlastaufnahme nur höchstens 0,2-fach so groß ist wie ohne die Dämpfvorrichtung.

Unter einer Dämpfvorrichtung ist eine Vorrichtung zu verstehen, die eine vom Rotor ausgehende Schwingung dadurch vermindert, dass der Schwingung eine innewohnende Energie zumindest teilweise in Wärme umgewandelt wird.

Gemäß einer bevorzugten Ausführungsform hat der Tragschrauber beim Betrieb einen Massenschwerpunkt, wobei die Dämpfvorrichtung auf einer Höhe zwischen einer Massenschwerpunkt-Höhe des Massenschwerpunkts und einer Rotorhöhe des Rotors angeordnet ist. In anderen Worten ist die Dämpfvorrichtung benachbart zum Rotor angeordnet. Das führt dazu, dass vom Rotor ausgehende Schwingungen besonders effektiv gemindert werden können. Der Massenschwerpunkt bezieht sich auf den Tragschrauber mit Nutzlast, also beispielsweise mit Pilot.

Günstig ist es, wenn die Dämpfvorrichtung so ausgebildet ist, dass sie eine Schwingung des Rotors um eine Querachse des Tragschraubers dämpft. Eine derartige Schwingung führt zu einer Auf- und Abschwingung am Pilotensitz, was besonders unerwünscht ist. Es kann vorgesehen sein, dass die Dämpfvorrichtung für Schwingungen um die Längsachse im Wesentlichen keine Dämpfwirkung hat. Derartige Schwingungen führen zu einer Drehschwingung des Pilotensitzes um einen Körperschwerpunkt des Piloten, was als wenig belastend empfunden wird. Zudem führt die Steifigkeit bezüglich einer Deformation in der Ebene senkrecht zur Längsachse zu geringen Relativbewegungen von Rotor zur Tragstruktur.

Gemäß einer bevorzugten Ausführungsform umfasst die Dämpfvorrichtung ein Gelenk, insbesondere ein Drehgelenk. Hierunter ist insbesondere ein Kugelgelenk, ein Kreuzgelenk oder ein Kadergelenk zu verstehen. Möglich ist aber auch ein Gelenk, das nur einen Schwenkfreiheitsgrad hat. In diesem Fall ist die Schwenkachse vorzugsweise die Querachse des Tragschraubers.

Bevorzugt umfasst die Dämpfvorrichtung zumindest ein aktives Dämpfelement. Unter einem aktiven Dämpfelement ist insbesondere ein Aktor zu verstehen, der über eine Energiezuführung Kräfte auf zwei Teile des Gelenks ausüben kann, die so gewählt sind, dass vom Rotor ausgehende Schwingungen die Nutzlastaufnahme nur abgeschwächt erreichen. Bei dem aktiven Dämpfelement kann es sich beispielsweise um einen Piezoaktor oder einen magnetostriktiven Aktor handeln. Das aktive Dämpfelement kann zudem ein aktiv einstellbares Dämpfelement sein, bei dem die Dämpfwirkung, beispielsweise elektrisch durch Anlegen einer Spannung oder eines Stroms, eingestellt werden kann.

Alternativ oder additiv umfasst die Dämpfvorrichtung zumindest ein passives Dämpfelement. Hierunter ist insbesondere zu verstehen, dass ein Bauteil vorhanden ist, das eine elastische Verformung zu einem hohen Anteil in Wärme umsetzt. Es kann sich beispielsweise um ein gummielastisches Element handeln. Alternativ oder additiv ist ein fluidhaltiger Dämpfer einsetzbar, beispielsweise ein Hydraulik- oder ein Pneumatikdämpfer. Bei derartigen Fluiddämpfern führt eine Bewegung zwischen zwei Aufhängepunkten des Fluiddämpfers dazu, dass ein Fluid von einer Kammer des Fluiddämpfers in eine andere bewegt wird und dabei durch eine Verengung strömt, so dass das Fluid beim Durchströmen Energie verliert. Das Fluid kann eine Flüssigkeit oder ein Gas sein.

Bevorzugt ist das Dämpfelement in seiner Dämpfung einstellbar. Wenn es sich um ein aktives Dämpfelement handelt, kann die Dämpfung des Dämpfelements direkt eingestellt werden.

Gemäß einer bevorzugten Ausführungsform weist die Dämpfvorrichtung eine einstellbare Federkonstante auf. Beispielsweise besitzt die Dämpfvorrichtung ein elastisches Element, das vorspannbar ist. Hierzu kann beispielsweise ein Dämpfelement eine nicht lineare Abhängigkeit der Rückstellkraft von der Auslenkung aufweisen. Das ist beispielsweise bei gummielastischen Dämpfelementen oder McKibben-Muskeln der Fall.

Vorzugsweise ist die Dämpfvorrichtung so ausgebildet, dass eine erste Eigenfrequenz der Tragstruktur mindestens 14 Hertz beträgt. Es hat sich gezeigt, dass so eine hinreichend hohe Sicherheit beim Betrieb des Tragschraubers erreicht werden kann. Insbesondere ist die Dämpfvorrichtung so ausgebildet, dass die Eigenfrequenz der Tragstruktur für eine Schwingung in einer Ebene senkrecht zur Längsachse des Tragschraubers mindestens 14 Hertz beträgt. Es ist möglich, dass die Dämpfvorrichtung so ausgebildet, dass die Eigenfrequenz beispielsweise für eine Schwingung senkrecht zur Querachse unter 14 Hertz liegt.

Bevorzugt ist die Dämpfvorrichtung zum Dämpfen von vom Rotor ausgehenden Schwingungen ausgebildet, die eine Bewegung der Nutzlastaufnahme mit einer vertikalen Bewegungskomponente bewirken. Hierunter zählen Schwingungen um die Querachse. Die Drehbewegung des Rotors führt zu einer Vielzahl von sich überlagernden Kräften und Drehmomenten. Besonders störend sind solche Kräfte bzw. Drehmomente, die zu einer Auf- und Ab-Bewegung der Nutzlastaufnahme führen. Dies ist nämlich für den Piloten besonders belastend. Wenn die Tragstruktur einen gebogenen Verlauf hat, so ist die Dämpfvorrichtung bevorzugt zum Dämpfen von Bewegungen des Rotors um eine Nickachse ausgebildet.

Gemäß einer bevorzugten Ausführungsform besitzt die Tragstruktur ein rotorseitiges Tragelement und ein rumpfseitiges Tragelement und die Dämpfvorrichtung weist ein gummielastisches Element und einen das gummielastische Element durchgreifenden Bolzen auf, wobei ein Kraftfluss von dem rotorseitigen Tragelement in das rumpfseitige Tragelement durch den Bolzen und das gummielastische Element verläuft. Beispielsweise ist das gummielastische Element hohlzylinderförmig und ist in einer Hülse aufgenommen, die an dem Tragelement befestigt ist, das mit dem Bolzen fest verbunden ist. Im Betrieb verläuft der Kraftfluss vom Tragelement über den Bolzen, das gummielastische Element und die Hülse in das andere Tragelement. Dieser Aufbau ist besonders einfach und zudem sehr sicher. Versagt nämlich das gummielastische Element, so verläuft der Kraftfluss vom Bolzen direkt in die Hülse, die Stabilität des Tragschraubers ist aber gewahrt.

Besonders günstig ist es, wenn das Tragelement, an dem der Bolzen befestigt ist, das Tragelement, an dem die Hülse befestigt ist, zumindest abschnittsweise umgreift. So wird eine Schwingung in Längsrichtung der Tragelemente besonders wirksam gedämpft. Schwingungen der beiden Tragelemente quer zueinander hingegen werden über den direkten Kontakt der beiden Tragelemente übertragen. So wird eine hohe Stabilität in Querrichtung erhalten.

Gemäß einer bevorzugten Ausführungsform hat der Tragschrauber einen Rumpf und einen relativ zum Rumpf kippbaren Rotorkopf sowie eine hydraulische Steuervorrichtung zum Kippen des Rotorkopfs relativ zum Rumpf. Ein derartiger Tragschrauber kann auch eine Dämpfvorrichtung aufweisen, das ist aber nicht notwendig.

*Bekannt sind Tragschrauber, bei denen der Rotorkopf mittels Steuerstangen mit einem Steuerknüppel verbunden ist. Wird der Steuerknüppel bewegt, so wird diese Bewegung mittels der Steuerstangen auf den Rotorkopf übertragen und dadurch gekippt. Je nach dem, ob der Rotorkopf im Flug um eine Nickachse oder eine Rollachse gekippt wird, beschleunigt der Tragschrauber nach vorne oder zur Seite. Nachteilig an bekannten Tragschraubern ist, dass es nicht möglich ist, den Rotorkopf so vom Rumpf zu entkoppeln, dass ein Eintrag von Schwingungen des Rotorkopfs auf den Rumpf vermindert wird, ohne dass aufgrund der Entkopplung der Steuerknüppel zu vibrieren anfängt.*

*Vorteilhaft an diesem Tragschrauber ist, dass eine Schwingung des Rotorkopfs relativ zum Rumpf des Tragschraubers über die hydraulische Steuervorrichtung übertragen wird. Die hydraulische Steuervorrichtung hat eine höhere Dämpfung als eine mechanische Verbindung, so dass der Steuerknüppel besonders ruhig ist. Das erhöht den Komfort beim Fliegen. Des Weiteren führt die verringerte Vibration zu weniger Ermüdung beim Piloten und damit zu mehr Sicherheit.*

*Vorteilhaft ist zudem, dass eine hydraulische Steuervorrichtung einfach mit einer Untersetzung realisiert werden kann. Das wiederum hat den Vorteil, dass der Tragschrauber weniger empfindlich auf kleine Bewegungen des Steuerknüppels reagiert.*

*Vorteilhaft ist zudem, dass die hydraulische Steuervorrichtung so ausgebildet sein kann, dass Hydraulikleitungen an aerodynamisch günstiger Stelle angebracht sind, beispielsweise im Windschatten des Rumpfs. Das senkt den Luftwiderstand des Tragschraubers und damit dessen Verbrauch.*

*Es wird unter dem Rotorkopf diejenige Einheit des Tragschraubers verstanden, die den Rotor mit dem starren Rumpf gelenkig verbindet. In anderen Worten ist der Rotorkopf dasjenige Bauteil, an dem der Rotor befestigt ist und mittels dem der Rotor relativ zum Rumpf verschwenkbar ist.*

*Unter der hydraulischen Steuervorrichtung wird insbesondere jede Steuervorrichtung verstanden, bei der eine Bewegung des Steuerknüppels in zumindest einer Richtung mittels einer Hydraulikflüssigkeit auf den Rotorkopf übertragen wird. Es ist dabei möglich, nicht aber notwendig, dass die Bewegungen des Steuerknüppels sowohl in Längsrichtung als auch in Querrichtung über die Hydraulikflüssigkeiten übertragen werden. So ist durchaus denkbar, dass eine Bewegung des Steuerknüppels in Querrichtung über eine Hydraulikflüssigkeit übertragen wird, wohingegen eine Bewegung in Längsrichtung mechanisch übertragen wird. Eine Bewegung des Steuerknüppels in Längsrichtung bezeichnet dabei eine Bewegung vom Piloten weg oder auf ihn zu, was einer Bewegung in Längsrichtung des Tragschraubers entpricht.*

*Gemäß einer bevorzugten Ausführungsform besitzt die Steuervorrichtung einen Steuerknüppel, einen Steuerzylinder, der mit dem Steuerknüppel verbunden ist, und einen Aktorzylinder, der mit dem Rotorkopf verbunden ist, wobei der Aktorzylinder so mit dem Steuerzylinder verbunden ist, dass eine Bewegung des Steuerknüppels zu einem Kippen des Rotorkopfs relativ zum Rumpf führt.*

*Es ist möglich, mehr als einen Steuerzylinder vorzusehen. Beispielsweise sind zwei Steuerzylinder und zwei Aktorzylinder jeweils in Gegenspieleranordnung ange- ordnet. Wird der Steuerknüppel in eine Richtung bewegt, so werden die Kolben der beiden Steuerzylinder in entgegengesetzte Richtungen bewegt. Daraus folgend werden auch die Kolben der beiden Aktorzylinder in entgegengesetzte Richtungen bewegt. Weil die Kolben der Aktorzylinder an entgegengesetzten Stellen am Rotorkopf angreifen, kippen sie ihn in die gleiche Richtung. Die jeweiligen Hydrauliksysteme aus Steuer- und Aktorzylinder sowie zugehörigen Hydraulikleitungen sind voneinander unabhängig, so dass eine Redundanz erzielt wird. Aus Gewichtsgründen ist es jedoch günstig, wenn nur ein Aktorzylinder und ein Steuerzylinder zum Kippen des Rotorkopfs um eine vorgegebene Achse vorgesehen sind. Vorteilhaft ist, wie weiter unten beschrieben wird, wenn zumindest zwei Teil-Steuervorrichfungen, nämlich eine Rollachsen-Steuervorrichtung und eine Nickachsen-Steuervorrichtung, mit jeweiligem Aktor- und Steuerzylinder vorhanden sind, die auf unterschiedliche Achsen des Tragschraubers wirken, nämlich auf eine Rollachse und eine Nickachse.*

*Bevorzugt weist die Steuervorrichtung einen Druckhalter auf. Unter einem Druckhalter wird eine Vorrichtung verstanden, die so ausgebildet ist, dass ein Hydraulikdruck, unter dem die Hydraulikflüssigkeit steht, oberhalb eines Mindest-Hydraulikdrucks gehalten wird. Hierdurch wird verhindert, dass sich eine etwaig vorhandene Gasblase in der Hydraulikflüssigkeit ausdehnt, wenn sich eine mit Hydraulikflüssigkeit gefüllte Komponente thermisch ausdehnt. Eine derartige Gasblase würde das Ansprechverhalten der Steuervorrichtung negativ beeinflussen und zu Spiel führen. Durch den Druckhalter wird ein stets hohes gutes Ansprechverhalten der Steuervorrichtung gewährleistet.*

*Besonders vorteilhaft ist, wenn der erste Druckhalter eine mit unter Gasdruck stehendem Druckgas gefüllte erste Druckgaskammer, eine mit Hydraulikflüssigkeit gefüllte erste Hydraulikfluidkammer und eine Membran aufweist, die die erste Druckgaskammer von der ersten Hydraulikfluidkammer so trennt, dass der Gasdruck auf die Hydraulikflüssigkeit übertragen wird. Ein derartiger Druckhalter lässt sich besonders einfach herstellen, sicher betreiben und gut warten.*

*Bevorzugt weist die Steuervorrichtung eine erste Hydraulikleitung, die ein erstes Ende des Steuerzylinders mit einem ersten Ende des Aktorzylinders verbindet, eine zweite Hydraulikleitung, die ein zweites Ende des Steuerzylinders mit einem zweiten Ende des Aktorzylinders verbindet, und ein Verbindungsventil zum Verbinden und Trennen von erster Hydraulikleitung und zweiter Hydraulikleitung auf. Hierdurch ist der Steuerknüppel justierbar. Zum Justieren des Steuerknüppels wird zunächst der Rotorkopf in seine Neutrallage gebracht, dass heißt in die Lage, die sich bei einer Fluggeschwindigkeit von 120 kmlh relativ zur umgebenden Luft selbsttätig einstellt. Danach wird bei geöffnetem Verbindungsventil der Steuerknüppel in die Lage gebracht, die der Steuerknüppel bei Neutrallage des Rotorkopfs einnehmen soll. Anschließend wird das Verbindungsventil geschlossen. So ist es möglich, individuelle Einstellungen des Steuerknüppels vorzunehmen.*

*Vorzugsweise ist das Verbindungsventil gegen unbeabsichtigtes Verbinden geschützt. Beispielsweise rastet das Verbindungsventil in der Stellung ein, in der die beiden Hydraulikleitungen voneinander getrennt sind. So wird verhindert, dass das Verbindungsventil im Flug die beiden Hydraulikleitungen verbindet, wodurch steuern unmöglich würde.*

*Gemäß einer bevorzugten Ausführungsform ist die Steuervorrichtung so ausgebildet, dass eine Druckschwankung im Aktorzylinder mit 18 Hertz zu einer Druckschwankung im Steuerzylinder führt, deren Amplitude um mindestens 70% kleiner ist. Das heißt, dass beispielsweise eine sinusförmige Schwingung des Rotorkopfs relativ zum Rumpf mit 18 Hertz zu einer Druckschwankung im Aktorzylinder führt, die ebenfalls sinusförmig ist und eine bestimmte Amplitude hat. Die Druckamplitude, die im Steuerzylinder (der mit dem Steuerknüppel verbunden ist) anliegt, beträgt dann höchstens das 0,3-fache der Amplitude im Aktorzylinder. Es sind sogar deutlich höhere Dämpfungen möglich, beispielsweise auf unter 10%.*

*Das wird besonders einfach dadurch erreicht, dass ein erster Hydraulikleitungs-Querschnitt der ersten Hydraulikleitung und*/*oder ein zweiter Hydraulikleitungs-Querschnitt der zweiten Hydraulikleitung so klein gewählt, dass die genannte Dämpfung erreicht wird.*

*Gemäß einer bevorzugten Ausführungsform ist ein Steuerzylinderquerschnitt des Steuerzylinders höchstens so groß wie ein Aktorzylinderquerschnitt des Aktorzylinders. Das führt zu einer Untersetzung, so dass der Tragschrauber weniger empfindlich auf eine Bewegung des Steuerknüppels reagiert.*

*Bevorzugt ist der Aktorzylinder so mit dem Steuerzylinder und dem Rotorkopf verbunden ist, dass eine Bewegung des Steuerknüppels in Querrichtung zu einem Kippen des Rotorkopfs um eine Rollachse des Tragschraubers führt. Aufgrund ihrer Funktion können dann der Steuerzylinder als Rollachsen-Steuerzylinder und der Aktorzylinder als Rollachsen-Aktorzylinder bezeichnet werden. Beide sind zusammen mit den zugehörigen Hydraulikleitungen Teil einer Rollachsen-Steuervorrichtung, die ihrerseits Teil der hydraulischen Steuervorrichtung ist.*

*Alternativ ist der Aktorzylinder so mit dem Steuerzylinder und dem Rotorkopf verbunden ist, dass eine Bewegung des Steuerknüppels in Querrichtung zu einem Kippen des Rotorkopfs um eine Nickachse des Tragschraubers führt. Aufgrund ihrer Funktion können dann der Steuerzylinder als Nickachsen-Steuerzylinder und der Aktorzylinder als Nickachsen-Aktorzylinder bezeichnet werden. Beide sind zusammen mit den zugehörigen Hydraulikleitungen Teil einer Nickachsen-Steuervorrichtung, die ihrerseits Teil der hydraulischen Steuervorrichtung ist.*

*Eine vollständig hydraulische Steuervorrichtung wird erhalten, wenn die Steuervorrichtung (a) eine Rollachsen-Steuervorrichtung umfasst, die einen Rollachsen-Aktorzylinder, der mit dem Rotorkopf verbunden ist, und einen Rollachsen-Steuerzylinder, der mit dem Steuerknüppel so verbunden ist, dass eine Bewegung des Steuerknüppels in Querrichtung zu einem Kippen des Rotorkopfs um eine Rollachse des Tragschraubers führt, aufweist und (b) Nickachsen-Steuervorrichtung umfasst, die einen Nickachsen-Aktorzylinder, der mit dem Rotorkopf verbunden ist, und einen Nickachsen-Steuerzylinder, der mit dem Steuerknüppel so verbunden ist, dass eine Bewegung des Steuerknüppels in Längsrichtung zu einem Kippen des Rotorkopfs um eine Nickachse des Tragschraubers führt, aufweist.*

*Besonders vorteilhaft ist es, wenn der Rotorkopf so getrimmt ist, dass dann, wenn zumindest eine der Hydraulikleitungen druckfrei ist, der Tragschrauber in einer stabilen Fluglage stabilisiert ist. Das bedeutet in anderen Worten, dass dann, wenn eine oder alle Hydraulikleitungen aufgrund beispielsweise eines Unfalls nicht mehr in der Lage sind, einen Druck vom jeweiligen Steuerzylinder auf den jeweiligen Aktorzylinder zu übertragen, der Rotor relativ zum Rumpf eine solche Lage einnimmt, dass der Tragschrauber durch reduzieren einer Motorleistung eines Motors gelandet werden kann.*

Im Folgenden wird die Erfindung anhand exemplarischer Ausführungsbeispiele und mit Bezug auf die beigefügten Zeichnungen näher erläutert. Dabei zeigt
- Figur 1: eine schematische Ansicht einer ersten Ausführungsform der Erfindung,
- Figur 2: eine schematische Ansicht einer zweiten Ausführungsform der Erfindung,
- Figur 3: eine Ansicht einer dritten Ausführungsform der Erfindung und
- Figur 4: eine schematische Ansicht einer zweiten Ausführungsform eines erfindungsgemäßen Tragschraubers. Die
- Figuren 5a, 5b,5c und 5d: zeigen Detailansichten der Dämpfvorrichtung des Tragschraubers nach Figur 4.
- *Figur 6*: *zeigt eine Seitenansicht eines Tragschraubers gemäß einer zweiten Ausführungsform der Erfindung,*
- *Figur 7*: *einen Rotorkopf eines erfindungsgemäßen Tragschraubers gemäß einer zweiten Ausführungsform und*
- *Figur 8a*: *eine schematische Ansicht einer Rollachsen-Steuervorrichtung der hydraulischen Steuervorrichtung des Tragschraubers gemäß* *Figur 2**.*
- *Figur 8b*: *zeigt eine Nickachsen-Steuervorrichtung der hydraulischen Steuervorrichtung des Tragschraubers gemäß* *Figur 2**.*

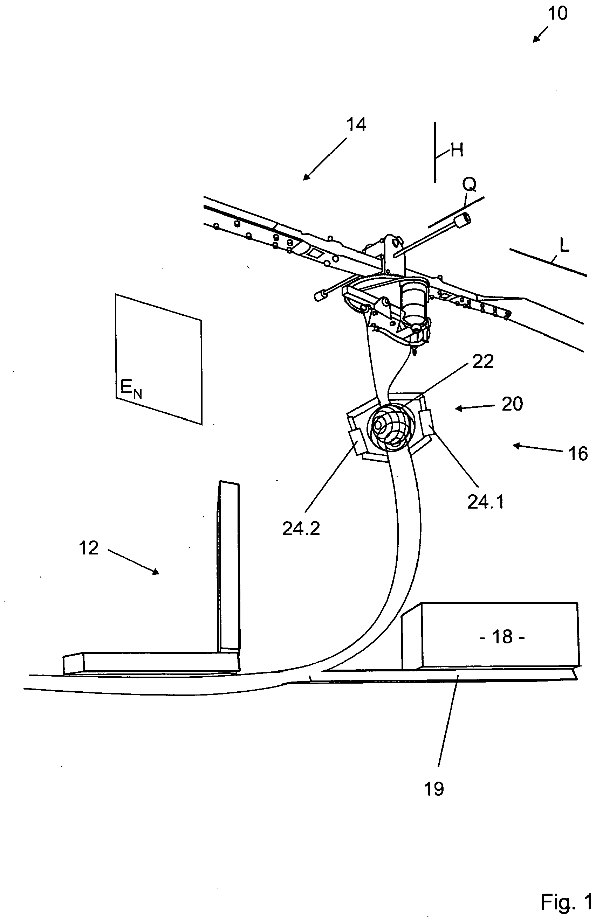

Figur 1 zeigt einen erfindungsgemäßen Tragschrauber 10 mit einer Nutzlastaufnahme 12 in Form eines Pilotensitzes, einem Rotor 14 und einer Tragstruktur 16, die die Nutzlastaufnahme 12 mit dem Rotor 14 verbindet. Unter dem Rotor 14 werden alle Komponenten zusammengefasst, die sich beim Flugbetrieb des Tragschraubers 10 drehen. Der Tragschrauber 10 wird von einem Motor 18 angetrieben, der mit einem nicht eingezeichneten Propeller zusammenwirkt und auf einer Motoraufnahme 19 montiert ist.

Die Tragstruktur 16 besitzt eine Dämpfvorrichtung 20, die ihrerseits ein Drehgelenk in Form eines Kugelgelenks 22 umfasst. Die Dämpfvorrichtung besitzt zudem ein erstes Dämpfelement 24.1 und ein zweites Dämpfelement 24.2 in Form von Piezoaktoren, die in Gegenspieleranordnung angeordnet sind. Zwei weitere Dämpfelemente, die ebenfalls in Gegenspieleranordnung angebracht sind, sind nicht eingezeichnet. Die Dämpfelemente 24 wirken sowohl als Aktoren als auch als Sensoren, die ein auf das Drehgelenk 22 wirkendes Drehmoment erfassen und ein GegenDrehmoment aufbringen, so dass eine Schwingung des Rotors 14 nur gedämpft zur Nutzlastaufnahme durchdringt.

Im Flug führt der Rotor 14 relativ zur Tragstruktur 16 eine Taumelbewegung aus, die im Koordinatensystem des Tragschraubers beschrieben wird. Der Tragschrauber 10 hat eine Hochachse H, eine Längsachse L und eine Querachse Q aufweist, die jeweils senkrecht aufeinander stehen und sich auf die Position des Tragschraubers im Reiseflug beziehen.

Die Dämpfvorrichtung 20 ist bei der Ausführungsform gemäß Figur 1 dazu ausgelegt, um die Übertragung einer Nickbewegung des Rotors auf den Sitz 12 zu dämpfen. Unter einer Nickbewegung ist zu verstehen, dass der Rotor 14 um die Querachse Q schwingt. Das entspricht einer Bewegung der Tragstruktur 16 in einer Ebene E_{N}, die senkrecht zur Querachse Q verläuft.

Es ist möglich, weitere Dämpfelemente vorzusehen, so dass auch eine Übertragung einer Schwingung des Rotors 14 um die Längsachse L auf die Tragstruktur 16 gedämpft wird. So wird eine Rollbewegung der Tragstruktur 16 gedämpft.

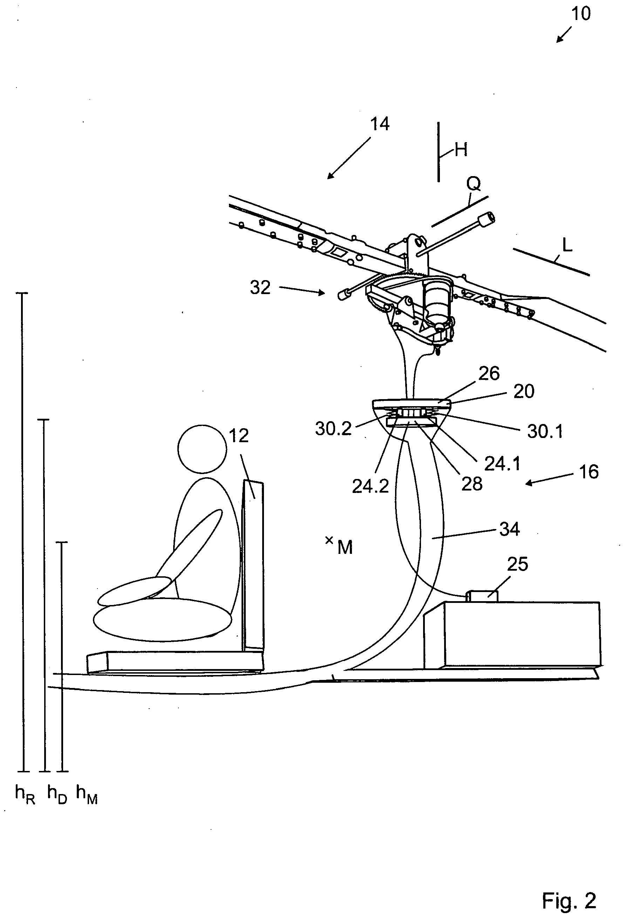

Figur 2 zeigt eine weitere Ausführungsform eines erfindungsgemäßen Tragschraubers 10, bei dem die Dämpfvorrichtung 20 mehrere Piezoaktoren 24 umfasst, von denen die Piezoaktoren 24.1, 24.2 eingezeichnet sind. Die Piezoaktoren 24 sind mit einer Ansteuereinheit 25 verbunden, mittels der sie mit einer elektrischen Spannung beaufschlagt werden können, so dass sie sich einstellbar längen oder verkürzen.

Die Piezoaktoren sind zwischen einer ersten Tragplatte 26 und einer zweiten Tragplatte 28 angeordnet. Die zweite Tragplatte 28 ist starr mit einem Rotorkopf 32 verbunden, wohingegen die erste Tragplatte 26 starr mit einem Tragarm 34 verbunden ist, an dem auch die Nutzlastaufnahme 12 in Form des Pilotensitzes befestigt ist.

Die Dämpfvorrichtung 20 kann Positionssensoren zum Erfassen einer Lage der beiden Tragplatten 26 und 28 relativ zueinander erfassen. Von den Positionssensoren erfasste Lagedaten werden von der Ansteuereinheit erfasst, woraufhin die Ansteuereinheit die Piezoaktoren 24 so mit Spannung beaufschlagt, dass die Schwingung des Pilotensitzes 12, also dessen zyklische Beschleunigung, vermindert wird. Zwischen der ersten Tragplatte 26 und der zweiten Tragplatte 28 können zudem mehrere Federn 30.1, 30.2, ... angeordnet sein.

Gemäß einer alternativen Ausführungsform umfasst die Dämpfvorrichtung Dämpfelemente in Form von gummielastischen Elementen. Es kann vorgesehen sein, dass die Dämpfelemente in ihrer Steifigkeit einstellbar sind. Das kann beispielsweise dadurch realisiert sein, dass die Dämpfelemente über eine Vorspannvorrichtung vorspannbar sind, so dass durch Erhöhen einer Vorspannkraft die Dämpfelement härter eingestellt werden können.

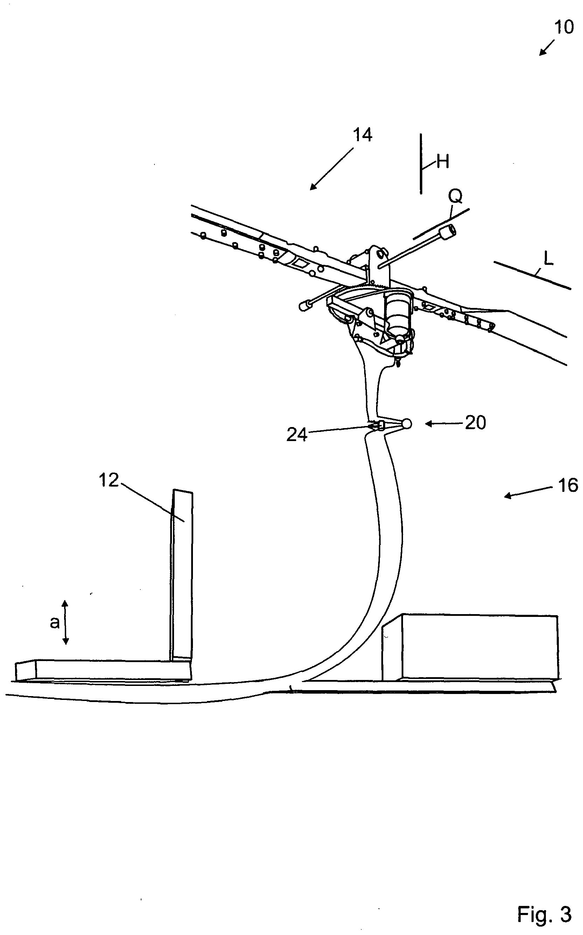

Figur 3 zeigt eine alternative Ausführungsform, bei der die Dämpfvorrichtung 20 ein Drehgelenk umfasst, dass nur um eine Drehachse, nämlich die Querachse, schwenkbar ist. Das hat den Vorteil, dass die Steifigkeit der Tragstruktur 16 mit der Dämpfvorrichtung 20 durch diese nur unwesentlich geschwächt wird.

Weil der Rotor 14 im Flug eine Nickbewegung um die Querachse Q macht, bewegt sich der Pilotensitz 12 mit einer vertikalen Bewegungskomponente, das heißt mit einer periodischen Beschleunigung a auf und ab. Die Dämpfvorrichtung 20 ist so ausgebildet, dass eine Amplitude A der Beschleunigung a(t) (t bezeichnet die Zeit) um mindestens 50% abnimmt, was die Belastung des Piloten verringert.

Die Dämpfvorrichtung 20 ist so ausgebildet, dass eine Eigenfrequenz f_{L} bezüglich einer Ebene senkrecht zur Längsachse L und eine Eigenfrequenz f_{Q} bezüglich der Ebene E_{N} senkrecht zur Querachse Q größer sind als 14 Hertz.

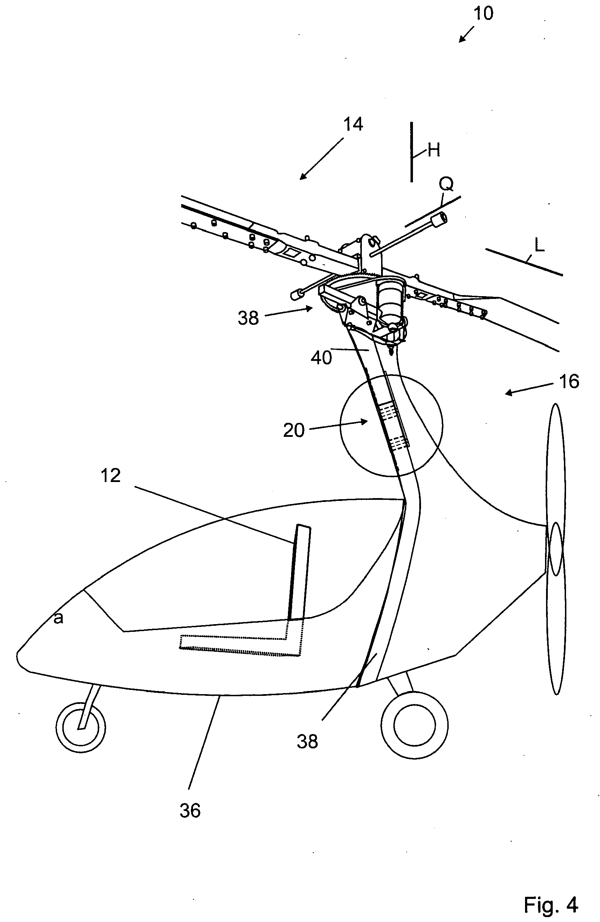

Figur 4 zeigt eine besonders vorteilhafte Ausführungsform eines erfindungsgemäßen Tragschraubers, bei dem die Nutzlastaufnahme 12 an einer frei tragenden Kanzel 36 befestigt ist. Die Kanzel 36 ist an einem rumpfseitigen Tragelement 38 befestigt. Das rumpfseitige Tragelement 38 ist mit einem rotorseitigen Tragelement 40 verbunden, an dem der Rotorkopf 32 angebracht ist.

Das rumpfseitige Tragelement 38 und das rotorseitige Tragelement 40 sind in einer Dämpfvorrichtung 20 miteinander verbunden.

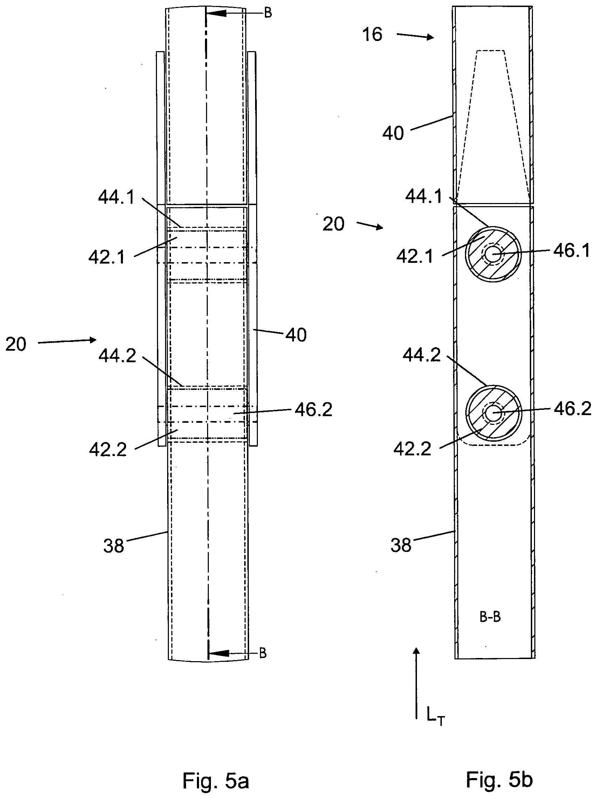

Figur 5a zeigt eine Detailansicht der Dämpfvorrichtung 20. Die Dämpfvorrichtung 20 umfasst ein gummielastisches Element 42.1, das hohlzylinderförmig ausgebildet ist. Das gummielastische Element ist in einer Hülse 44.1 angeordnet, die an dem rumpfseitigen Tragelement 38 befestigt ist.

Figur 5b zeigt eine um 90° um die Längsachse gedrehte Ansicht.

Das gummielastische Element 42.1 wird von einem Bolzen 46.1 durchgriffen, der am rotorseitigen Tragelement 40 angebracht ist.

Die Dämpfvorrichtung 20 umfasst zudem zumindest ein zweites gummielastisches Element 42.2, das in einer zweiten Hülse 44.2 angeordnet ist und von einem zweiten Bolzen 46.2 durchgriffen ist. Der zweite Bolzen 46.2 ist auch mit dem rotorseitigen Tragelement 40 verbunden, beispielsweise verschweißt oder verschraubt.

Das rumpfseitige Tragelement 38, das rotorseitige Tragelement 40 und die Dämpfvorrichtung sind Teil der Tragstruktur 16, die eine Tragstruktur-Längsachse L_{T} hat. Das rumpfseitige Tragelement 38 und das rotorseitige Tragelement 48 greifen ineinander, so dass eine Schwingung in Richtung der Tragstruktur-Längsachse L_{T} durch die Dämpfvorrichtung 20 effektiv gedämpft wird. Hingegen werden Schwingungen senkrecht zur Tragstruktur-Längsachse L_{T} deutlich weniger gedämpft, so dass eine Steifigkeit in diesen Querrichtungen erhöht ist. Auf diese Weise werden für den Piloten unangenehme Schwingungen besonders effektiv gedämpft, wohingegen die für die Stabilität des Tragschraubers notwendige Steifigkeit in Querrichtung erhalten bleibt.

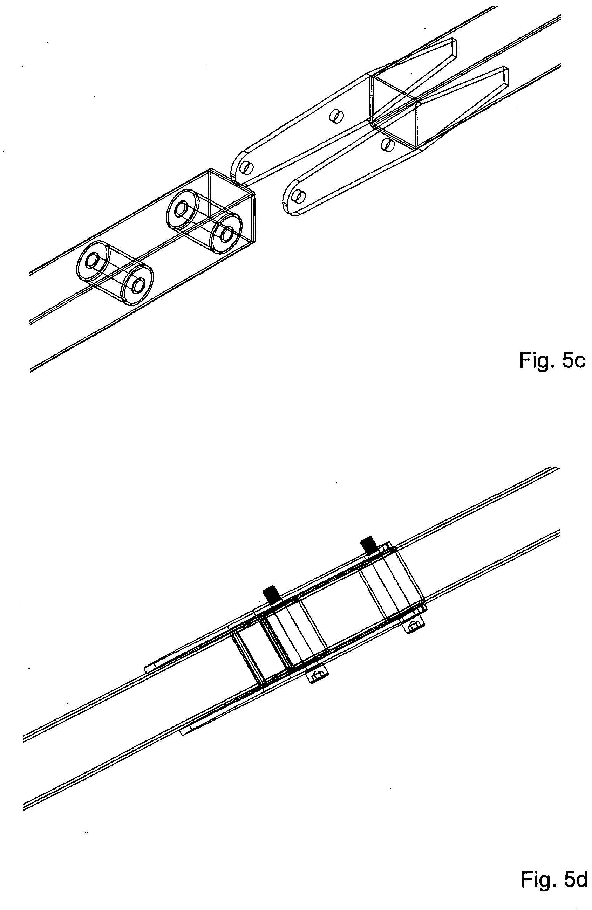

Figur 5c zeigt eine perspektivische Glaskörper-Ansicht der Dämpfvorrichtung (20). Die Figur 5d zeigt eine Draufsicht in einer Glaskörper-Ansicht der Dämpfungsvorrichtung gemäß Figur 5c.

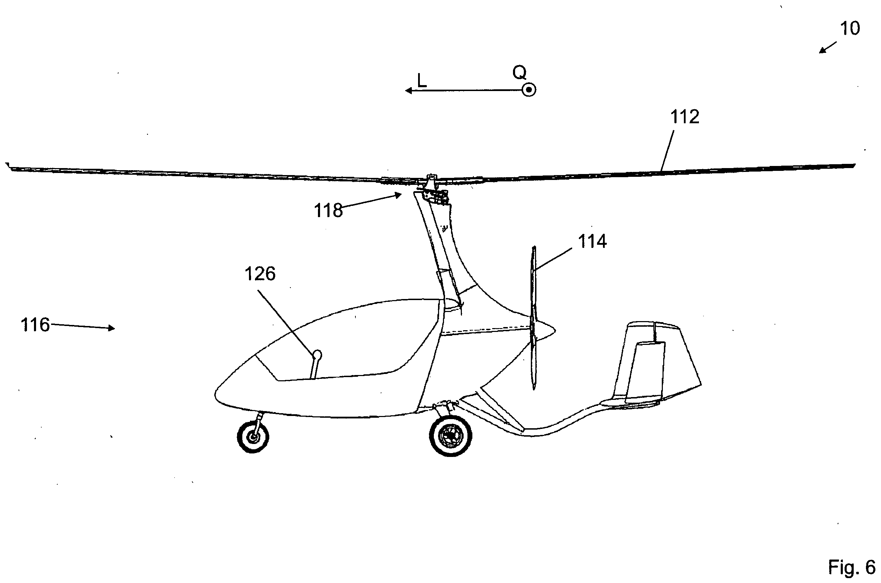

*Figur 6* *zeigt einen erfindungsgemäßen Tragschrauber 10 gemäß einer zweiten Ausführungsform, dessen Dämpfvorrichtung nicht eingezeichnet ist. Der Tragschrauber hat eine Längsachse L und eine Querachse Q und umfasst einen Rotor 112 und einen Propeller 114, der Teil eines Rumpfes 116 ist. Der Rumpf 116 ist über einen Rotorkopf 118 mit dem Rotor 112 verbunden.*

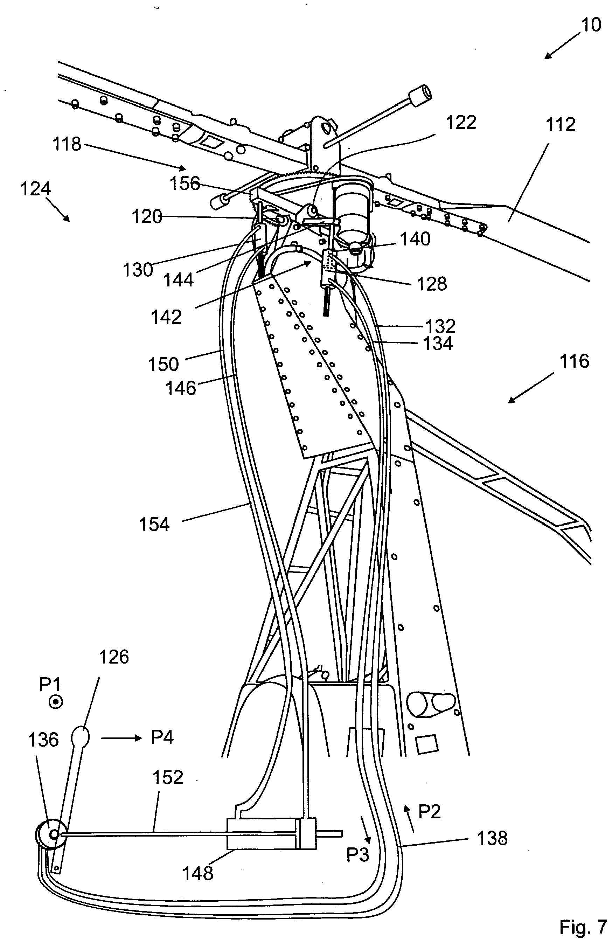

*Figur 7* *zeigt den Rotorkopf 118, der eine Rollachse 120 und eine Nickachse 122 umfasst. Der Rotorkopf 118 ist relativ zum Rumpf 116 mittels einer Steuervorrichtung 124 kippbar. Die Steuervorrichtung 124 umfasst einen Steuerknüppel 126, einen Rollachsen-Aktorzylinder 128 und einen Nickachsen-Aktorzylinder 130. Der Rollachsen-Aktorzylinder 128 ist über eine erste Hydraulikleitung 132 und eine zweite Hydraulikleitung 134 mit einem Rollachsen-Steuerzylinder 136 verbunden.*

*Der Rollachsen-Aktorzylinder 128 ist, wie in* *Figur 7* *schematisch angedeutet ist, mit dem Steuerknüppel 126 so verbunden, dass eine Bewegung des Steuerknüppels 126 in Querrichtung, die durch einen aus der Zeichnungsebene nach oben weisenden Pfeil P1 angedeutet ist, dazu führt, das Hydraulikflüssigkeit 138 in der ersten Hydraulikleitung 132 wie durch einen Pfeil P2 angedeutet fließt und in der zweiten Hydraulikleitung 134 wie durch einen Pfeil P3 angedeutet fließt. Ein Kolben 140 des Rollachsen-Aktorzylinders 128 wird daraufhin in* *Figur 7* *nach unten gedrückt, so dass der Rotorkopf 118 um die Rollachse 120 kippt. Der Rollachsen-Aktorzylinder ist dazu mit einem ersten Ende 142 an einem Stutzen 144 befestigt, der unterhalb der Nickachse 122 angeordnet ist. Dadurch führt ein Nicken des Rotorkopfs 118 nicht zu einem Rollen des Rotorkopfs 118.*

*Über eine dritte Hydraulikleitung 146 ist ein unteres Ende des Nickachsen-Aktorzylinders 130 mit einem ersten Ende eines Nickachsen-Steuerzylinders 148 verbunden. Ein zweites Ende des Nickachsen-Steuerzylinders 148 steht über eine vierte Hydraulikleitung 150 in Verbindung mit einem oberen Ende des Nickachsen-Aktorzylinders 130. Wird der Steuerknüppel 126 in Längsrichtung wie durch einen Pfeil P4 angedeutet bewegt, so wird diese Bewegung über eine Stange 152 auf einen Kolben des Nickachsen-Steuerzylinders 148 übertragen. Dadurch wird Hydraulikflüssigkeit 154 in den Hydraulikleitungen 146, 150 bewegt und der Rotorkopf 118 verringert seinen Nickwinkel. Das heißt, dass sich in* *Figur 7* *der Rotor 112 nach rechts um die Nickachse 122 verschwenkt.*

*Der Nickachsen-Aktorzylinder 130 ist oberhalb der Rollachse 120 an einem Stutzen 156 montiert. Wenn der Rotorkopf daher um seine Rollachse 120 schwenkt, so ändert sich der Nickwinkel im Wesentlichen nicht.*

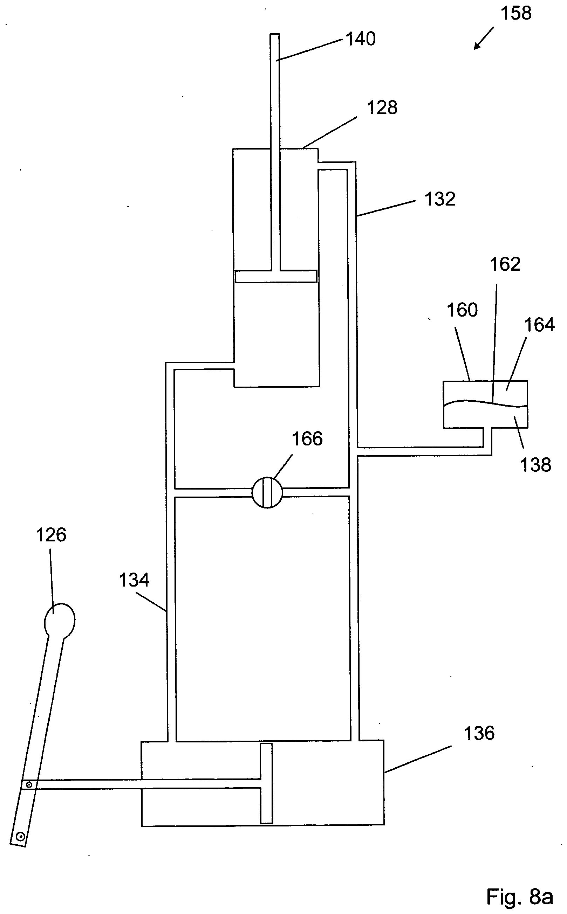

*Figur 8a* *zeigt eine schematische Ansicht einer Rollachsen-Steuervorrichtung 158, das Teil der Steuervorrichtung 124 ist. Die Rollachsen-Steuervorrichtung 158 umfasst neben dem Rollachsen-Aktorzylinder 128, dem Rollachsen-Steuerzylinder 136 sowie den Hydraulikleitungen 132, 134 einen Druckhalter 160. Der Druckhalter 160 besitzt eine Membran 162, die eine Druckgaskammer 164 von der Hydraulikflüssigkeit 138 trennt. Die Druckgaskammer 164 ist mit einem unter Druck stehenden Gas, beispielsweise Stickstoff, gefüllt. Der Gasdruck kann beispielsweise oberhalb von 130 bar liegen.*

*Die erste Hydraulikleitung 132 und die zweite Hydraulikleitung 134 sind über ein Verbindungsventil 166 miteinander verbindbar und voneinander trennbar. Ist das Verbindungsventil 166 geöffnet, so kann der Steuerknüppel 126 bewegt werden, ohne dass das zu einer Bewegung des Kolbens 140 des Rollachsen-Aktorzylinders 130 führt.*

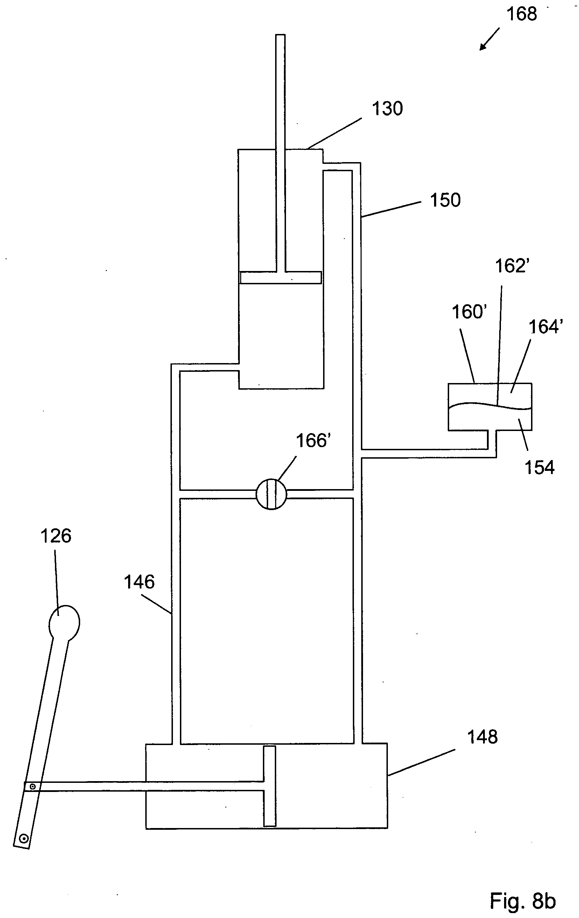

*Figur 8b* *zeigt eine Nickachsen-Steuervorrichtung 168 mit dem Nickachsen-Steuerzylinder 148, dem Nickachsen-Aktorzylinder 130 und den Hydraulikleitungen 146, 150. Die übrigen Komponenten tragen die gleichen Bezeichnungen wie die korrespondierenden Komponenten der Rollachsen-Steuervorrichtung 158 (**Figur 8a**) mit einem Strich. Es kann vorgesehen sein, dass beide Steuersysteme über ein nicht eingezeichnetes Verbindungsventil miteinander verbunden sind, so dass ein Druckhalter 160 ausreichend ist.*

**Bezugszeichenliste**

| | | | | | |
|---|---|---|---|---|---|
| 10 | Tragschrauber | | | *126* | *Steuerknüppel* |
| 12 | Nutzlastaufnahme | | | *128* | *Rollachsen-Aktorzylinder* |
| 14 | Rotor | | | | |
| 16 | Tragstruktur | | | *130* | *Nickachsen-Aktorzylinder* |
| 18 | Motor | | | *132* | *erste Hydraulikleitung* |
| | | | | *134* | *zweite Hydraulikleitung* |
| 20 | Dämpfvorrichtung | | | *136* | *Rollachsen-Steuerzylinder* |
| 22 | Drehgelenk | | | *138* | *Hydraulikflüssigkeit* |
| 24 | Dämpfelement | | | | |
| 26 | Tragplatte | | | *140* | *Kolben* |
| 28 | Tragplatte | | | *142* | *erstes Ende* |
| | | | | *144* | *Stutzen* |
| 30 | Feder | | | *146* | *dritte Hydraulikleitung* |
| 32 | Rotorkopf | | | *148* | *Nickachsen-Steuerzylinder* |
| 34 | Tragarm | | | | |
| 36 | Kanzel | | | *150* | *vierte Hydraulikleitung* |
| 38 | rumpfseitiges Tragelement | | | *152* | *Stange* |
| | | | | *154* | *Hydraulikflüssigkeit* |
| 40 | rotorseitiges Tragelement | | | *156* | *Stutzen* |
| 42 | gummielastisches Element | | | *158* | *Rollachsen-Steuervorrichtung* |
| 44 | Hülse | | | | |
| 46 | Bolzen | | | *160* | *Druckhalter* |
| | | | | *162* | *Membran* |
| | *112* | *Rotor* | | *164* | *Druckgaskammer* |
| | *114* | *Propeller* | | *166* | *Verbindungsteil* |
| | *116* | *Rumpf* | | *168* | *Nickachsen-Steuervorrichtung* |
| | *118* | *Rotorkopf* | | | |
| | | | H | Hochachse | |
| | *120* | *Rollachse* | L | Längsachse | |
| | *122* | *Nickachse* | L_{T} | Tragstruktur-Längsachse | |
| | *124* | *Steuervorrichtung* | Q | Querachse | |

## Patentansprüche

1. Tragschrauber mit
(a) einer Nutzlastaufnahme in Form eines Sitzes (12),
(b) einem Rotor (14) und
(c) einer den Rotor (14) mit der Nutzlastaufnahme (12) verbindenden Tragstruktur (16), wobei
(d) die Tragstruktur (16) eine Dämpfvorrichtung (20) zum Dämpfen von vom Rotor (14) ausgehenden Schwingungen aufweist, **dadurch gekennzeichnet, dass**
(e) die Dämpfvorrichtung (20) ausgelegt ist, um eine Übertragung einer Nickbewegung des Rotors auf den Sitz (12) zu dämpfen.

2. Tragschrauber nach Anspruch 1, **dadurch gekennzeichnet, dass**
- der Tragschrauber (10) beim Betrieb einen Massenschwerpunkt (M) hat und
- die Dämpfvorrichtung (20) auf einer Höhe zwischen einer Massenschwerpunkt-Höhe (h_{M}) des Massenschwerpunkts (M) und einer Rotor-Höhe (M_{R}) des Rotors (14) angeordnet ist.

3. Tragschrauber nach einem der vorstehenden Ansprüche, **dadurch gekennzeichnet, dass** die Dämpfvorrichtung (20) zumindest ein aktives Dämpfelement (24) umfasst.

4. Tragschrauber nach Anspruch 3, **dadurch gekennzeichnet, dass** das zumindest eine Dämpfelement (24) eine einstellbare Dämpfung hat.

5. Tragschrauber nach einem der Ansprüche 3 bis 4, **dadurch gekennzeichnet**, die Dämpfvorrichtung (20) so ausgebildet ist, dass eine erste Eigenfrequenz (f) der Tragstruktur (16) bezüglich einer Schwingung in einer Ebene senkrecht zur Längsachse (L) mindestens 14 Hertz beträgt.

6. Tragschrauber nach einem der Ansprüche 3 bis 5, **dadurch gekennzeichnet, dass** die Dämpfvorrichtung (20) so ausgebildet ist, dass eine erste Eigenfrequenz der Tragstruktur (16) bezüglich einer Schwingung in einer Ebene senkrecht zur Querachse (Q) mindestens 14 Hertz beträgt.

7. Tragschrauber nach einem der vorstehenden Ansprüche, **dadurch gekennzeichnet, dass** die Dämpfvorrichtung (20) zum Dämpfen von vom Rotor (14) ausgehenden Schwingungen ausgebildet ist, die eine Bewegung der Nutzlastaufnahme (12) mit einer vertikalen Bewegungskomponente bewirken.

8. Tragschrauber nach einem der vorstehenden Ansprüche, **dadurch gekennzeichnet, dass**
- wobei die Tragstruktur (16) ein rotorseitiges Tragelement (40) und ein rumpfseitiges Tragelement (38) besitzt und
- die Dämpfvorrichtung (20)
ein gummielastisches Element (42) und
einen das gummielastische Element (42) durchgreifenden Bolzen (46) aufweist,
- wobei ein Kraftfluss von dem rotorseitigen Tragelement (40) in das rumpfseitige Tragelement (38) durch den Bolzen (46) und das gummielastische Element (42) verläuft.

## Claims

1. Autogyro with
(a) a payload receptacle in the form of a seat (12),
(b) a rotor (14) and
(c) a support structure (16) that connects the rotor (14) with the payload receptacle (12),
**characterised by** the fact that
(d) the support structure (16) comprises a damping device (20) for damping oscillations originating from the rotor (14),
(e) the damping device (20) is designed to damp a transfer of a pitching movement of the rotor to the seat (12).

2. Autogyro according the claim 1, **characterised by** the fact that
- the autogyro (10) has a centre of gravity (M) during operation and
- the damping device (20) is arranged at a height between a centre of gravity height (h_{M}) of the centre of gravity (M) and a rotor height (M_{R}) of the rotor (14).

3. Autogyro according to one of the above claims, **characterised by** the fact that the damping device (20) has at least one active damping element (24).

4. Autogyro according to claim 3, **characterised by** the fact that the at least one damping element (24) has an adjustable damping.

5. Autogyro according to one of the claims 3 to 4, **characterised by** the fact that the damping device (20) is designed such that a first eigenfrequency (f) of the support structure (16) has a value of at least 14 Hertz in relation to an oscillation on a plane perpendicular to the longitudinal axis (L).

6. Autogyro according to one of the claims 3 to 5, **characterised by** the fact that the damping device (20) is designed in such a way that a first eigenfrequency of the support structure (16) has a value of at least 14 Hertz in relation to an oscillation on a plane perpendicular to the transverse axis (Q).

7. Autogyro according to one of the above claims, **characterised by** the fact that the damping device (20) is designed for damping oscillations originating from the rotor (14), these oscillations initiating a movement of the payload receptacle (12) with a vertical movement component.

8. Autogyro according to one of the above claims, **characterised by** the fact that
- the support structure (16) comprises a bearing element on the rotor side and a bearing element (38) on the fuselage side, and
- the damping device (20) comprises
a rubber-elastic element (42) and
a bolt (46) that runs through the rubber-elastic element (42),
- wherein a flux of force from the bearing element on the rotor side (40) runs through the bolt (46) and the rubber-elastic element (42) into the bearing element on the fuselage side (38).

## Revendications

1. Autogire, comprenant
(a) un moyen de réception de charge utile sous la forme d'un siège (12),
(b) un rotor (14) et
(c) une structure porteuse (16) qui relie le rotor (14) au moyen de réception de charge utile (12),
dans lequel
(d) la structure porteuse (16) comprend un dispositif amortisseur (20) pour amortir les vibrations émanant du rotor (14),
**caractérisé en ce que**
(e) le dispositif amortisseur (20) est conçu pour amortir une transmission d'un mouvement d'inclinaison du rotor vers le siège (12).

2. Autogire selon la revendication 1, **caractérisé en ce que**
- l'autogire (10) présente en fonctionnement un centre de gravité (M), et
- le dispositif amortisseur (20) est agencé à une hauteur entre une hauteur (h_{M}) du centre de gravité (M) et une hauteur (M_{R}) du rotor (14).

3. Autogire selon l'une des revendications précédentes, **caractérisé en ce que** le dispositif amortisseur (20) inclut au moins un élément amortisseur actif (24).

4. Autogire selon la revendication 3, **caractérisé en ce que** ledit au moins un élément amortisseur (24) présente un amortissement réglable.

5. Autogire selon l'une des revendications 3 et 4, **caractérisé en ce que** le dispositif amortisseur (20) est ainsi réalisé qu'une première fréquence propre (f) de la structure porteuse (16) s'élève, par référence à une oscillation dans un plan perpendiculaire à l'axe longitudinal (L), à au moins 14 Hz.

6. Autogire selon l'une des revendications 3 à 5, **caractérisé en ce que** le dispositif amortisseur (20) est ainsi réalisé qu'une première fréquence propre de la structure porteuse (16) s'élève, par référence à une oscillation dans un plan perpendiculaire à l'axe transversal (Q), à au moins 14 Hz.

7. Autogire selon l'une des revendications précédentes, **caractérisé en ce que** le dispositif amortisseur (20) est réalisé pour amortir des oscillations émanant du rotor (14) qui entraînent un mouvement du moyen de réception de charge utile (12) avec une composante de mouvement vertical.

8. Autogire selon l'une des revendications précédentes, **caractérisé en ce que**
- la structure porteuse (16) possède un élément porteur côté rotor (40) et un élément porteur côté coque (38), et
- le dispositif amortisseur (20) comprend
un élément présentant l'élasticité du caoutchouc (42) et
un boulon (46) qui traverse l'élément présentant l'élasticité du caoutchouc (42),
- dans lequel un flux des efforts depuis l'élément porteur côté rotor (40) vers l'élément porteur côté coque (38) passe à travers le boulon (46) et l'élément présentant l'élasticité du caoutchouc (42).
